# EUROPEAN PATENT APPLICATION

(11) **EP 4 361 676 A1**
(43) Date of publication of application: **01.05.2024**
(21) Application number: 22204479.4
(22) Date of filing: 28.10.2022
(51) Int. Cl.: G01S 13/86, G01S 13/89, G01S 13/931, G06V 20/56

(54) **METHODS AND SYSTEMS FOR DETERMINING A PROPERTY OF AN OBJECT**

(71) Applicant: Aptiv Technologies AG, 8200 Schaffhausen (CH)
(72) Inventor: Roesler, Simon, 41460 Neuss (DE)
(74) Representative: Manitz Finsterwald Patent- und Rechtsanwaltspartnerschaft mbB

(57) **Abstract**

A computer implemented method for determining a property of an object comprises the following steps carried out by computer hardware components: acquiring an image of a scene comprising the object; acquiring a plurality of lidar measurements of the scene; clustering the plurality of lidar measurements into a plurality of groups of lidar measurements; acquiring a radar measurement of the scene; identifying which of the plurality of groups of lidar measurements corresponds to the radar measurement; and determining the property of the object based on the image and the identified group of lidar measurements

## Description

### FIELD

The present disclosure relates to methods and systems for determining a property of an object, in particular for object detection using a camera, a lidar sensor, and a radar sensor.

### BACKGROUND

Object detection is an important aspect for various applications, for example for assisted driving or autonomous driving.

However, object detection today is computationally expensive if reliable and accurate results are required.

Accordingly, there is a need to provide improved methods and systems for object detection.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for determining a property of an object, the method comprising the following steps performed, or carried out, by computer hardware components: acquiring an image of a scene comprising the object; acquiring a plurality of lidar measurements of the scene; clustering the plurality of lidar measurements into a plurality of groups of lidar measurements; acquiring a radar measurement of the scene; identifying which of the plurality of groups of lidar measurements corresponds to the radar measurement; and determining the property of the object based on the image and the identified group of lidar measurements.

With the method according to various embodiments, radar may be used to select the lidar measurements, but there may also be hypotheses detections (for example for boxes or masks) which are based on the image and the lidar measurements. With the combination of radar and lidar, those hypotheses may be filtered. It will be understood that irrespective of whether first filtering of lidar measurements with radar measurement or filtering of images and lidar measurements matchings with radar measurements will be performed, the result may be the same.

The radar measurement may include radar data which may be pre-processed using either FFT (Fast Fourier Transform) or a high resolution method like SAMV/IAA (iterative sparse asymptotic minimum variance/ iterative adaptive approach). It will be understood that any existing detection method may be used for pre-processing.

The lidar measurements may be provided and used as a raw point cloud consisting of xyz coordinates. Other properties like reflectance may be considered as well.

In other words, radar data measurement data may be used to identify which of a plurality of lidar measurements corresponds to an object which is also detected based on an image. Fusing all these information may provide efficient and reliable detection of the object.

The plurality of lidar measurements may comprise or may be a plurality of lidar rays.

Illustratively, information on a high level is extracted from the image, and on a low level from the radar and lidar measurements. It will be understood that low and high level refer to the abstraction: From the camera, the high level information such as "this is a car" may be extracted.

With the method according to various embodiments, camera and LiDAR assisted long range radar labeling may be provided.

According to an embodiment, the computer implemented method further comprises the following step carried out by the computer hardware components: determining whether at least one group of lidar measurements of the plurality of groups of lidar measurements corresponds to the radar measurement. If it is determined that at least one group of lidar measurements of the plurality of groups of lidar measurements corresponds to the radar measurement, then one of these groups that corresponds to the radar measurement is identified and used as the identified group of lidar measurements. If more than one group corresponds to the radar measurement, one of these groups may be identified, or each of these group may be identified and treated as a separate hypothesis. If no group corresponds to the radar measurement, the present measurements (image and/or lidar measurements and/or radar measurements) may be discarded or an error treating protocol may be initiated.

According to an embodiment, the image and/ or the radar measurement and/ or the plurality of lidar measurements corresponds to an area in the scene which comprises the object. Thus, all measurement data (image, radar measurements, lidar measurements) may provide information of the (same) object, and using all these information according to various embodiments as described herein may lead to efficient and reliable detection results.

According to an embodiment, the computer implemented method further comprises the following steps carried out by the computer hardware components: determining a respective first distance hypothesis of each of the group of lidar measurements based on the lidar measurements in the respective group of lidar measurements; determining a second distance hypothesis based on the radar measurement; wherein it is identified which of the plurality of groups of lidar measurements corresponds to the radar measurement based on a correspondence between the respective first distance hypothesis and the second distance hypothesis. Using the correspondence between the respective first distance hypothesis and the second distance hypothesis for identifying the group of lidar measurements which corresponds to the radar measurement may provide that a group is identified for which the two distance hypotheses are in good agreement and which may hold true at the same time without any contradiction. For example, the correspondence may be expressed as a difference (or a squared difference) between the first distance hypothesis and the second distance hypothesis.

According to an embodiment, identifying which of the plurality of groups of lidar measurements corresponds to the radar measurement comprises identifying one lidar measurement of the plurality of lidar measurements for which a distance between the first distance hypothesis of the lidar measurement and the second distance hypothesis comprises a minimum value. Thus, even if more than one group of lidar measurements corresponds to the radar measurement, one (and only one) group of lidar measurements may be identified for further processing.

According to an embodiment, the computer implemented method further comprises the following step carried out by the computer hardware components: tracking at least one of the first distance hypotheses and/or the second distance hypothesis over a plurality of time steps. Tracking these first distance hypothesis and/or second distance hypothesis over a plurality of time steps may provide that single outliers may be compensated, and that noise in a single hypothesis may be reduced.

According to an embodiment, the computer implemented method further comprises the following step carried out by the computer hardware components: tracking images and/or lidar measurements and/or radar measurements over a plurality of time steps to determine a speed estimate; wherein the radar measurements comprise a range rate; wherein it is identified which of the plurality of groups of lidar measurements corresponds to the radar measurement based on a correspondence between the speed estimate and the range rate. Using the correspondence between the speed estimate and the range rate for identifying the group of lidar measurements which corresponds to the radar measurement may provide that a group is identified for which the speed estimate and the range rate are in good agreement and which may hold true at the same time without any contradiction. For example, the correspondence may be expressed as a difference (or a squared difference) between the speed estimate and the range rate.

According to an embodiment, the computer implemented method further comprises the following step carried out by the computer hardware components: matching an area of the image to the identified group of lidar measurements; wherein preferably the matching is based on at least one of the image without any processing to the image, an object detected box, or a mask predicted by a machine learning method.

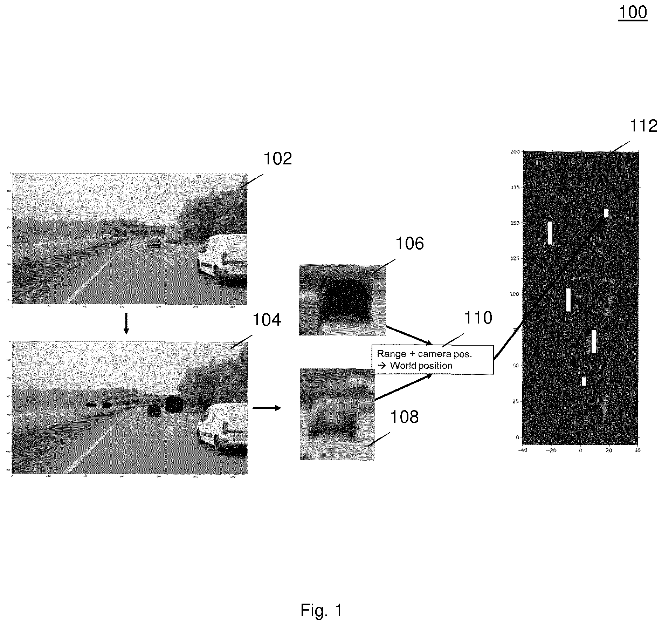

The matching may include transferring the image coordinates under the mask/box into the lidar/radar/vehicle coordinate system. For each point from the image, a ray in the lidar/radar coordinate system may be obtained. Any lidar/radar point closer to the ray than a given threshold may be matched and considered for the further processing. Illustratively, this is equal to projecting the lidar points into the image and checking if it inter-sects with the mask/box. This is displayed in 106 and 108 of Fig. 1.

According to an embodiment, the computer implemented method further comprises the following step carried out by the computer hardware components: carrying out object detection and/ or classification based on the acquired image. Based on the determined property, the object may be detected and/ or a class of the object may be determined. According to various embodiments, a combination of Lidar detections with image pixels may be provided which then allows building a 3D position. That position may then be used to match it with radar detections.

According to an embodiment, the property comprises at least one of: a class of the object, a position of the object (for example in a world coordinate system or relative to a vehicle coordinate system of a vehicle on which the camera, radar sensor and lidar sensor are provided), a distance of the object (for example from the vehicle), and a velocity of the object (for example absolute velocity, for example in a world coordinate system, or relative velocity, for example relative to the vehicle).

In one aspect, the present disclosure is directed at a training method for training a machine learning method, the training method comprising the following steps carried out by computer hardware components: determining ground truth data based on the computer implemented method for determining a property of an object as described herein; and training the machine learning method based on the ground truth data.

In one aspect, the present disclosure is directed at a control method for controlling a vehicle, the control method comprising the following steps carried out by computer hardware components: determining information related to a surrounding of the vehicle based on the computer implemented method for determining a property as described herein; and controlling the vehicle based on the information.

In another aspect, the present disclosure is directed at a computer system, said computer system comprising a plurality of computer hardware components configured to carry out several or all steps of the computer implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle, comprising: the computer system as described herein, a camera configured to acquire the image; a lidar sensor configured to acquire the plurality of lidar measurements; and a radar sensor configured to acquire the radar measurements.

In another aspect, the present disclosure is directed at a non-transitory computer readable medium comprising instructions which, when executed by a computer, cause the computer to carry out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: an illustration of a full pipeline for determining a property of an object according to various embodiments;
- Fig. 2: a flow diagram illustrating a for determining a property of an object according to various embodiments; and
- Fig. 3: a computer system with a plurality of computer hardware components configured to carry out steps of a computer implemented method for determining a property of an object according to various embodiments.

### DETAILED DESCRIPTION

Determining a property of an object, for example object detection, is an important aspect for various applications, for example for assisted or autonomous driving.

However, object detection today is computationally expensive if reliable and accurate results are required.

Methods for determining a property of an object may be used to generate training data, for example for machine learning methods, for example for supervised deep learning. The training data may be labelled data, which includes the input and information on the desired output. The desired output may reflect the ideal output. The desired output may also be referred to as ground truth.

The idea of supervised deep learning is to connect raw data with high level results using an appropriate neural network architecture. Using labelled data, the weights of a neural network may be optimized to produce the desired output given the input. This process may require a lot of data to make the network generalize well, so that the network also performs good on before unseen data. For the task of object detection, labelling may be a cost intensive process since it commonly requires humans to accurately spot and annotate each relevant object in a scene with an appropriate box. Furthermore, data may be hard to annotate directly by a human.

In commonly used system, LiDAR data may be used to detect and annotate. For example, a LiDAR sensor may be used and boxes may be automatically generated by a second neural network that uses the LiDAR data. Those annotations can then be forwarded to the RADAR domain for usage as training data.

However, the LiDAR may have the downside of getting very sparse with increasing range. While it may still be possible to detect and classify a car in 80m using the current LiDAR, it may not be possible to do so in 160m, because a car will only be hit by too few LiDAR rays. This may at least partially be overcome by using better LiDAR sensors, however improvements in long range may be very expensive.

According to various embodiments, the problem of accurately detecting objects in a long range, for example creation long range annotations for training a radar deep neural network, may be overcome by using a camera as the main source of annotation, instead of the previously employed LiDAR. If the resolution is high enough and/ or the field of view of the camera is small enough, it may be possible to detect and annotate a vehicle in 160m and beyond if the weather is good enough.

Using the camera, the angular position of the box relative to the car may be accurately estimated. The camera may also be used to annotate. The annotation may be generated by a deep neural network while the angular position relative to the car may be determined by the position in the image frame (XY) which gives, with the intrinsic calibration of the camera, a line in the camera coordinate system and with the extrinsic calibration a line in the vehicle coordinate system. Then the position may be determined based on determining the angle of the line relative to the car.

According to various embodiments, further sensors (which may be referred to as secondary sensors) may be used to improve accuracy of the range information. The secondary sensors may be a LiDAR, a RADAR or both. Instead of relying on the LiDAR only as in commonly used system, all available sensor data may be used according to various embodiments for determining a property of an object, for example object detection, for example to generate annotations for training a RADAR deep neural network.

By transforming the LiDAR measurements into the camera image, boxes may be matched with the LiDAR measurements which then give a relatively precise range measurement. The matching may include transferring the image coordinates under the mask/box into the lidar/radar/Vehicle coordinate system. For each point from the image we get a ray in the lidar/radar coordinate system. Any lidar/radar point closer to the ray than a given threshold is matched and considered for the further processing. Illustratively, this may be equal to projecting the lidar points into the image and checking if it intersects with the mask/box. This is illustrated in 106 and 108 of Fig. 1.

Transforming the LiDAR measurements into the camera image may overcome the range accuracy issues a camera may have. Usually, a car in 160m may be hit by multiple LiDAR rays. However, since the matching between boxes and LIDAR measurements may not be perfect due to multiple reasons, it may happen that there are false range measurements associated with a box annotation. This may likely happen with far targets. Thus, according to various embodiments, various solutions are provided to overcome this problem, as will be described in the following.

If the LiDAR points are not consistent, the RADAR can be applied as another measuring sensor. The LiDAR measurements may be clustered, so that there may be different range hypotheses for each box annotation. Clustering may include that Lidar points matched with the same object are considered and then points with a similar range (closer than a chosen threshold) are clustered to one hypothesis. Different hypotheses may be considered not consistent if they are too far away from each other (for example where the distance is above a threshold). Then the RADAR information (for example preprocessed by FFT (Fast Fourier Transform) or high res method like SAMV/IAA (iterative sparse asymptotic minimum variance/ iterative adaptive approach)) may be fused with the different box annotations, effectively building a joint distribution between the lidar range estimate and the radar range estimate. Fusing may be provided similarly to the lidar matching, for example by intersection with the box/mask. Using a joint distribution (which may be determined based on the scoring as described below), the different hypotheses may be scored and failures in the LiDAR matching may be detected. Different metrics may be defined for scoring to build an overall score of the box based on:
number of different lidar range hypotheses (since more hypotheses may indicate that its unreliable); and
confirming that radar detection exists.

Those annotations, i.e. the annotations identified by the failure detection as being wrong, can either be removed directly or be used to define ignore regions during training. (so that the ignored regions are not used for training. For ignored regions, the network may neither get a positive nor a negative training feedback. Thus, the network may learn meaningful results for those regions without explicit feedback through generalization.

Since it is not easy to transform the RADAR data into the camera image, it may not be possible to skip the LiDAR step and directly use the RADAR for the range measurement. Common radar sensors may lack a sufficient height resolution, therefore it may be hard to directly map a radar detection onto the camera frame. With the help of the lidar according to various embodiments, a good height information may be acquired.

According to various embodiments, a tracker may be added which may further improve the quality of the labels, since infrequent mismatches between the camera and the LiDAR may easily be filtered out. The tracker may track an image both in the camera and in the lidar frame with multiple hypotheses. Random mismatches may result in random placed boxed in the world coordinates, but due to the tracker, they won't be present consistently, while the true detection may always be present. Thus, the tracker may filter out objects that are flickering and/or jumping around. Also more complex rules like filtering based on tracked speed vs RADAR detected speed may be applied, leading to very robust filtering rules.

Determining a property of an object, for example object detection, according to various embodiments may support a human annotator, but can also be very easily transformed into an automated ground truth generation pipeline.

Commonly used deep neural networks generating boxes on camera images may be used to generate the base detections for each camera frame. Those commonly used deep neural networks may completely take the human annotator out of the loop; however, in some embodiments, a human may be integrated as a feedback loop for interactive filtering and track validation.

Fig. 1 shows an illustration 100 of a full pipeline for determining a property of an object, for example for automated annotation generation, using all sensor data and a mask-generating neural network according to various embodiments. In input image 102 is illustrated. Based on the image 102, a mask or a box 106 are determined related to an object, for example a car. Image 104 illustrates the box 106 in the image 102. Furthermore, lidar measurements 108 are used together with the mask or box 106 to determine a world position 110 of the object based on a range and a camera position. The world position may then be used for further processing, for example in connection with a map 112, which may be referred to as radar activation map. As illustrated in Fig. 1, a full pipeline including annotation, lidar matching and SAMV (sparse asymptotic minimum variance) validation may be provided. The annotation and SAMV validation is illustrated in 112 in Fig. 1.

Illustratively, Fig. 1 shows processing with a pipeline of first image processing and then lidar processing.

Further improvements by using a better LiDAR sensor may allow for even better box generations and more accurate LiDAR-Box matchings. Additionally or alternatively, networks generating a mask instead of just a box around a detected object may be deployed for generating the detections on camera images. Using a mask may heavily improve the box-LIDAR matching, drastically reducing the number of hypotheses. A mask may be understood as a plurality of pixels which indicate where an object is present. A box may be understood as a box around a detected object. A mask may resembles the shape of the detected object better than a box, since the regular bounding box also contains part of the background. For example, taking 108 as illustrated in Fig. 1 as an example, the top left lidar point may not belong to the vehicle but to the road ahead. It is included in the box but not in the mask 106.

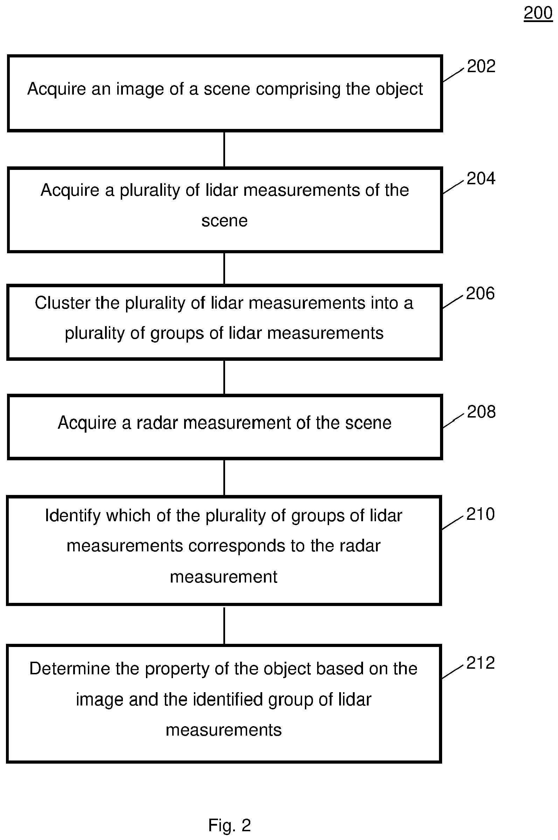

Fig. 2 shows a flow diagram 200 illustrating a for determining a property of an object according to various embodiments. At 202, an image of a scene including (or showing) the object may be acquired. At 204, a plurality of lidar measurements of the scene may be acquired. At 206, the plurality of lidar measurements may be clustered into a plurality of groups of lidar measurements. At 208, a radar measurement of the scene may be acquired. At 210, it may be identified which of the plurality of groups of lidar measurements corresponds to the radar measurement. At 212, the property of the object may be determined based on the image and the identified group of lidar measurements.

According to various embodiments, it may be determined whether at least one group of lidar measurements of the plurality of groups of lidar measurements corresponds to the radar measurement.

According to various embodiments, the radar measurement and/ or the plurality of lidar measurements may correspond to an area in the scene which comprises the object.

According to various embodiments, a respective first distance hypothesis of each of the group of lidar measurements may be determined based on the lidar measurements in the respective group of lidar measurements. According to various embodiments, a second distance hypothesis may be determined based on the radar measurement. According to various embodiments, it may be identified which of the plurality of groups of lidar measurements corresponds to the radar measurement based on a correspondence between the respective first distance hypothesis and the second distance hypothesis.

According to various embodiments, identifying which of the plurality of groups of lidar measurements corresponds to the radar measurement may include or may be identifying one lidar measurement of the plurality of lidar measurements for which a distance between the first distance hypothesis of the lidar measurement and the second distance hypothesis comprises a minimum value.

According to various embodiments, at least one of the first distance hypotheses and/or the second distance hypothesis may be tracked over a plurality of time steps.

According to various embodiments, images and/or lidar measurements and/or radar measurements may be tracked over a plurality of time steps to determine a speed estimate. According to various embodiments, the radar measurements may include a range rate. According to various embodiments, it may be identified which of the plurality of groups of lidar measurements corresponds to the radar measurement based on a correspondence between the speed estimate and the range rate.

According to various embodiments, an area of the image may be matched to the identified group of lidar measurements. According to various embodiments, the matching may be based on at least one of the image without any processing to the image, an object detected box, or a mask predicted by a machine learning method.

According to various embodiments, object detection and/ or classification may be carried out based on the acquired image.

According to various embodiments, the property may include or may be at least one of: a class of the object, a position of the object, a distance of the object, and a velocity of the object.

Each of the steps 202, 204, 206, 208, 210, 212 and the further steps described above may be performed by computer hardware components.

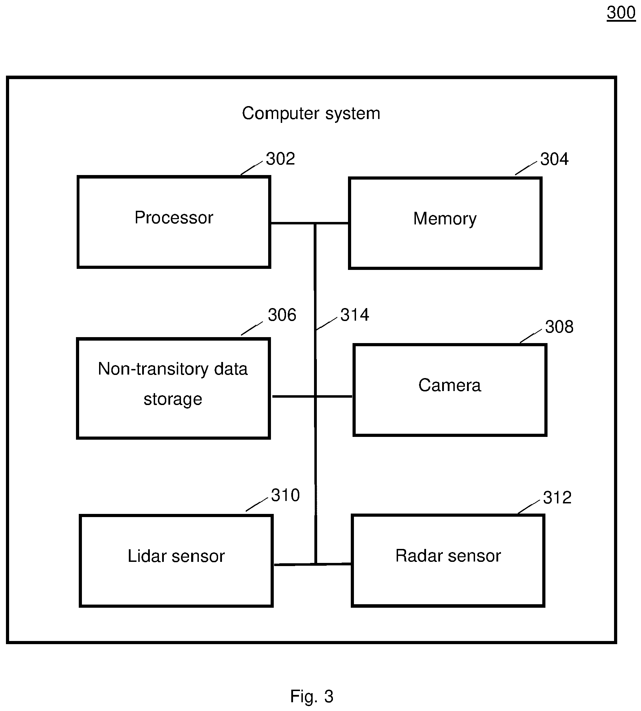

Fig. 3 shows a computer system 300 with a plurality of computer hardware components configured to carry out steps of a computer implemented method for determining a property of an object according to various embodiments. The computer system 300 may include a processor 302, a memory 304, and a non-transitory data storage 306. A camera 308 and/ or a lidar sensor 310 and/or a radar sensor 312 may be provided as part of the computer system 300 (like illustrated in Fig. 3), or may be provided external to the computer system 300 (for example a vehicle on which the computer system is provided).

The processor 302 may carry out instructions provided in the memory 304. The non-transitory data storage 306 may store a computer program, including the instructions that may be transferred to the memory 304 and then executed by the processor 302. The camera 308 may be used to acquire an image of a scene comprising the object. The lidar sensor 310 may be used to acquire a plurality of lidar measurements of the scene. The radar sensor 312 may be used to acquire a radar measurement of the scene.

The processor 302, the memory 304, and the non-transitory data storage 306 may be coupled with each other, e.g. via an electrical connection 314, such as e.g. a cable or a computer bus or via any other suitable electrical connection to exchange electrical signals. The camera 308 and/ or the lidar sensor 310 and/or the radar sensor 312 may be coupled to the computer system 300, for example via an external interface, or may be provided as parts of the computer system (in other words: internal to the computer system, for example coupled via the electrical connection 314).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 300.

It will be understood that lidar may also be referred to as LiDAR or LIDAR. It will be understood that radar may also be referred to as RADAR.

Reference numeral list
- 100: illustration of a full pipeline for determining a property of an object according to various embodiments
- 102: input image
- 104: image with box
- 106: mask or box
- 108: lidar measurements
- 110: world position
- 112: map

- 200: flow diagram illustrating a for determining a property of an object
- 202: step of acquiring an image of a scene comprising the object
- 204: step of acquiring a plurality of lidar measurements of the scene
- 206: step of clustering the plurality of lidar measurements into a plurality of groups of lidar measurements
- 208: step of acquiring a radar measurement of the scene
- 210: step of identifying which of the plurality of groups of lidar measurements corresponds to the radar measurement
- 212: step of determining the property of the object based on the image and the identified group of lidar measurements

- 300: computer system according to various embodiments
- 302: processor
- 304: memory
- 306: non-transitory data storage
- 308: camera
- 310: lidar sensor
- 312: radar sensor
- 314: connection

## Claims

1. Computer implemented method for determining a property of an object, the method comprising the following steps carried out by computer hardware components:
- acquiring (202) an image of a scene comprising the object;
- acquiring (204) a plurality of lidar measurements of the scene;
- clustering (206) the plurality of lidar measurements into a plurality of groups of lidar measurements;
- acquiring (208) a radar measurement of the scene;
- identifying (210) which of the plurality of groups of lidar measurements corresponds to the radar measurement; and
- determining (212) the property of the object based on the image and the identified group of lidar measurements.

2. The computer implemented method of claim 1, further comprising the following step carried out by the computer hardware components:
determining whether at least one group of lidar measurements of the plurality of groups of lidar measurements corresponds to the radar measurement.

3. The computer implemented method of at least one of claims 1 to 2,
wherein the radar measurement and/ or the plurality of lidar measurements corresponds to an area in the scene which comprises the object.

4. The computer implemented method of at least one of claims 1 to 3, further comprising the following steps carried out by the computer hardware components:
determining a respective first distance hypothesis of each of the group of lidar measurements based on the lidar measurements in the respective group of lidar measurements;
determining a second distance hypothesis based on the radar measurement;
wherein it is identified which of the plurality of groups of lidar measurements corresponds to the radar measurement based on a correspondence between the respective first distance hypothesis and the second distance hypothesis.

5. The computer implemented method of claim 4,
wherein identifying which of the plurality of groups of lidar measurements corresponds to the radar measurement comprises identifying one lidar measurement of the plurality of lidar measurements for which a distance between the first distance hypothesis of the lidar measurement and the second distance hypothesis comprises a minimum value.

6. The computer implemented method of at least one of claims 4 to 5, further comprising the following step carried out by the computer hardware components:
tracking at least one of the first distance hypotheses and/or the second distance hypothesis over a plurality of time steps.

7. The computer implemented method of any one of claims 1 to 6, further comprising the following step carried out by the computer hardware components:
tracking images and/or lidar measurements and/or radar measurements over a plurality of time steps to determine a speed estimate;
wherein the radar measurements comprise a range rate;
wherein it is identified which of the plurality of groups of lidar measurements corresponds to the radar measurement based on a correspondence between the speed estimate and the range rate.

8. The computer implemented method of at least one of claims 1 to 7, further comprising the following step carried out by the computer hardware components:
matching an area of the image to the identified group of lidar measurements;
wherein preferably the matching is based on at least one of the image without any processing to the image, an object detected box, or a mask predicted by a machine learning method.

9. The computer implemented method of at least one of claims 1 to 8, further comprising the following step carried out by the computer hardware components:
carrying out object detection and/ or classification based on the acquired image.

10. The computer implemented method of at least one of claims 1 to 9:
wherein the property comprises at least one of: a class of the object, a position of the object, a distance of the object, and a velocity of the object.

11. Training method for training a machine learning method, the training method comprising the following steps carried out by computer hardware components:
determining ground truth data based on the computer implemented method for determining a property of an object of at least one of claims 1 to 10; and training the machine learning method based on the ground truth data.

12. Control method for controlling a vehicle, the control method comprising the following steps carried out by computer hardware components:
determining information related to a surrounding of the vehicle based on the computer implemented method for determining a property of an object of at least one of claims 1 to 10; and
controlling the vehicle based on the information.

13. Computer system (300), the computer system (300) comprising a plurality of computer hardware components configured to carry out steps of the computer implemented method of at least one of claims 1 to 12.

14. Vehicle, comprising:
the computer system (300) of claim 13;
a camera configured (308) to acquire the image;
a lidar sensor (310) configured to acquire the plurality of lidar measurements; and
a radar sensor (312) configured to acquire the radar measurements.

15. Non-transitory computer readable medium comprising instructions for carrying out the computer implemented method of at least one of claims 1 to 12.
